# EUROPEAN PATENT SPECIFICATION

(11) **EP 2 784 282 B1**
(45) Date of publication and mention of the grant of the patent: **01.11.2017**
(21) Application number: 13178398.7
(22) Date of filing: 29.07.2013
(51) Int. Cl.: F01N 3/20

(54) **A tank for selective catalytic reduction purification of the exhaust gases of a combustion engine of a vehicle**
Tank für selektive katalytische Reduktionsreinigung der Abgase eines Verbrennungsmotors eines Fahrzeugs
Réservoir pour épuration catalytique sélective des gaz d'échappement d'un moteur à combustion interne d'un véhicule

(30) Priority: 29.03.2013 EP 13305415
(43) Date of publication of application: 01.10.2014
(73) Proprietor: Inergy Automotive Systems Research (Société Anonyme), 1120 Bruxelles (BE)
(72) Inventor: Dougnier, Francois, 3190 Boortmeerbeek (BE); Madoux, Dominique, 7611 Rumes (BE); Van Schaftingen, Jules-Joseph, 1300 Wavre (BE)
(74) Representative: Potdevin, Emmanuel Eric

(56) References cited:
- EP-A2- 0 314 091
- WO-A2-2006/012903
- DE-A1- 10 308 257
- DE-A1-102006 023 145
- DE-A1-102007 061 441
- DE-A1-102009 047 338
- DE-U1- 29 708 591
- JP-A- 2005 273 509
- US-A1- 2004 115 110
- US-A1- 2008 223 021

## Description

The present application relates to the purification of the exhaust gases of a combustion engine of a vehicle by injecting exclusively ammonia gas, and more particularly ammonia gas that is released from one or several solid absorbing matrices where it is stored by sorption.

Legislation on vehicle and truck emissions stipulates a reduction in the release of nitrogen oxides NOₓ into the atmosphere. One known way to achieve this objective is to use the SCR (Selective Catalytic Reduction) process which enables the reduction of nitrogen oxides by injection of a reducing agent, generally ammonia, into the exhaust line. This ammonia may be obtained by using different techniques. One known technique is based on the use of a solid absorbing matrix where the ammonia is trapped by sorption. Generally, the matrix is stored in a container (hereafter called matrix storage container) mounted on the vehicle. According to this technique, the ammonia is released by heating the matrix, and then the released ammonia is injected into the exhaust line.

This known technique offers high performance since it allows to send pure NH₃ in the exhaust gases of the vehicle.

However, the main disadvantage of this technique is the complexity of the refilling procedure (i.e. the matrix regeneration). Indeed, the actual refilling procedure consists of connecting the matrix storage container to an external ammonia source, typically a highly pressurized cylinder. In this procedure, the matrix storage container has to be dismounted from the vehicle for ammonia loading. Moreover, sending a high pressure of ammonia in the solid matrix results in a huge heat generation due to exothermal sorption reaction (tens of thousands J/mol NH₃, as a likely order of magnitude), hence the need of a cooling unit as heat sink. High temperature can damage parts of the system and induce long regeneration time.

The document DE 10 2009 047338 discloses a tank for mounting on a vehicle comprising a container suitable for containing an ammonia precursor and a system arranged for storing ammonia gas.

The document DE 10 2006 023145 discloses a tank for mounting on a vehicle comprising a container suitable for containing an aqueous urea solution and a system arranged for decomposing the ammonia precursor of the container into ammonia gas.

The document DE 297 08 591 U1 discloses a tank for mounting on a vehicle comprising a container suitable for containing an ammonia precursor and a system arranged for decomposing the ammonia precursor of the container into ammonia gas and storing it, the system being located partially on a wall of the container.

In view of the above-mentioned disadvantage, there exists a need for improving the regeneration of the solid absorbing matrix.

To this end, the invention provides a tank according to claim 1.

This ammonia gas is then used for regenerating the solid absorbing matrix. Thus, an in situ regeneration procedure is proposed. In other words, the regeneration of the matrix takes place on board the vehicle. More precisely, the regeneration procedure according to the invention is based on the decomposition of an ammonia precursor.

In a particular embodiment, the decomposition of the ammonia precursor can be obtained by using a thermal decomposition unit. For example, this decomposition unit comprises a controllable heater.

In another particular embodiment, the decomposition of the ammonia precursor can be obtained by using a biochemical decomposition unit mounted on board the vehicle. This unit stores one or several protein component(s) that catalyse a chemical reaction. In other words, the protein component(s) are activated, for example by heating. More precisely, the protein component(s) is(are) adapted to catalyse the hydrolysis (i.e. decomposition) of the ammonia precursor to ammonia. This decomposition results in the generation of a refilling ammonia gas. The refilling ammonia gas is then directed (i.e. transmitted) to the solid absorbing matrix where it is stored thereon. According to the invention, no external ammonia source is used and no disassembling manual operations are needed for the regeneration of the matrix(ces). Thus, the regeneration procedure according to the invention is simple, faster and safer.

The terms "urea solution" are understood to mean any, generally aqueous, solution containing urea. The invention gives good results with eutectic water/urea solutions for which there is a quality standard: for example, according to the standard ISO 22241, in the case of the AdBlue® solution (commercial solution of urea), the urea content is between 31.8 % and 33.2 % (by weight) (i.e. 32.5 +/- 0.7 wt%) hence an available amount of ammonia between 18.0 % and 18.8 %. The invention may also be applied to the urea/ammonium formate mixtures, also in aqueous solution, sold under the trade name Denoxium™ and of which one of the compositions (Denoxium-30) contains an equivalent amount of ammonia to that of the AdBlue® solution. The latter have the advantage of only freezing from -30°C onwards (as opposed to -11°C), but have the disadvantages of corrosion problems linked to the possible release of formic acid. The invention can also apply to guanidinium formate. The present invention is particularly advantageous in the context of eutectic water/urea solutions, which are widely available in gas stations.

Advantageously, the system is located at least partially inside the container.

Preferably the whole system is located inside the container. Accordingly, the decomposition of the ammonia precursor takes place inside the ammonia precursor container, where this precursor is directly available. Thus, there is no need to equip the vehicle with pipes or pumps that would serve to transfer the precursor from the container to the decomposition unit. Another advantage is that there is no risk of leakage of ammonia precursor outside because it is transferred to the decomposition unit without leaving the container. Furthermore, mounting on the vehicle is made easier as the decomposition unit, located inside the container, is mounted together with it on the vehicle.

In an embodiment, the system comprises a decomposition unit.

Advantageously, the decomposition unit comprises at least one protein component suitable for decomposing the ammonia precursor.

Preferably, the protein component comprises at least one enzyme, such as urease.

In particular, thermophile-type enzymes are well suited. Urease can be stored in any suitable manner. For example, in a first embodiment urease can be immobilized in different layers of resin. In a second embodiment urease can be fixed on membranes.

In one embodiment, the container has an opening giving access to the component from the outside of the container without disassembling the decomposition unit from the container.

Thus, the component may be replaced by a fresh one in a simple manner.

Preferably, the decomposition unit is equipped with a heater.

Such heater can provide the optimum temperature for the desired activity of the enzyme or protein. For example, the heater can be configured to maintain within the biochemical decomposition unit a temperature range between 30°C and 60°C.

More generally, the temperature of the chamber having the heater is controlled within predetermined ranges; in case the predetermined range falls below the temperature of the environment, cooling means will also be made available within the heater. In other words, the heater can either be controlled so as to rise up the temperature within the chamber or controlled so as to cool down the temperature within the chamber.

In a particular embodiment, the heater is configured to work within at least one predetermined temperature range corresponding to the activation of the protein component when conversion is needed, and within at least another predetermined temperature range corresponding to the preservation of the protein component, so as to extend its lifetime.

In a particular embodiment of the invention, the heater comprises resistive heating elements. These resistive heating elements may be metallic heating filaments (wires), flexible heaters, (that is to say heaters comprising one or more resistive track(s) affixed to a film or placed between two films or sheets (that is to say two substantially flat supports, the material and thickness of which are such that they are flexible)) or any other type of resistive elements that have a shape, size and flexibility suitable for being inserted into and/or wound around the components of the SCR system. PTC (Positive Temperature Coefficient) elements are more particularly suitable for heating.

In another particular embodiment of the invention, the heater uses the dissipated heat of the engine (for instance, a flow of the liquid engine cooling system) and/or exhaust line (gases) for heating the biochemical decomposition unit.

Preferably, the tank is arranged for activating the heater during a period of time predetermined as a function of dimensions of the decomposition unit and properties of the component.

In one embodiment, the decomposition unit has a removable cover for closing the opening and at least one valve allowing communication between the ammonia precursor and the component, the tank being arranged so that removing the cover closes the valve.

Accordingly, when one reaches the component through the opening, flow communication between the component and the ammonia precursor is automatically interrupted, which prevents any leakage of precursor outside the tank.

Advantageously, the decomposition unit has two chambers, at least one of them being arranged so that a fluid contained in the chamber is in contact with the component;

The tank according to the invention may also present at least one of the following features:
- only one of the chambers is arranged so that a fluid contained in the chamber is in contact with the component;
- both chambers are arranged so that a fluid contained in the chamber is in contact with the component;
- the chambers are separated by a wall arranged to move with respect to other walls of the chambers;
- the chambers are separated by a rigid wall;
- the wall is mounted to slide with respect to other walls of the chambers;
- the chambers are separated by a flexible wall;
- the chambers are separated by a wall having ends which are rigidly fixed to other walls of the chambers;
- the wall is permeable to ammonia gas;
- the chambers are in fluid communication with each other through the wall;
- the chambers are not in fluid communication with each other through the wall;
- only one of the chambers is arranged for transferring ammonia gas from this chamber to the storage unit; and
- both chambers are arranged for transferring ammonia gas from the chamber to the storage unit.

In one embodiment, the decomposition unit comprises a bladder arranged for controlling a flow of ammonia gas out of the decomposition unit.

In one embodiment, a first one of the chambers is arranged for decomposing the ammonia precursor into ammonia gas and a second one of the chambers is arranged for receiving ammonia gas from the first chamber and transferring it to a storage unit.

In another embodiment, each chamber is arranged for decomposing the ammonia precursor into ammonia gas and transferring it to a storage unit without this gas passing through the other chamber, the chambers extending on opposite sides of a wall arranged to move with respect to other walls of the chambers.

In another embodiment, a first one of the chambers is arranged for decomposing the ammonia precursor into ammonia gas and transferring it to a storage unit without this gas passing through the second chamber, the second chamber being arranged for receiving a solution from the first chamber.

Advantageously, the tank comprises means for recovering ammonia present in liquid phase in the decomposition unit.

Thus, at least part of the ammonia in liquid phase is not wasted.

Preferably, the recovering means comprises a liquid-vapour separator unit, these means preferably being arranged for sending the ammonia gas to a storage unit without making it pass through the decomposition unit.

Indeed, if the ammonia precursor generates water by thermal decomposition, this water is separated from the ammonia, collected and preferably prevented from being stored on the solid absorbing matrix. Separation of the water from the ammonia, and generally from the eventual other thermal decomposition products (generally gases like CO₂), can be made using a liquid-vapour separator unit. For example, the liquid-vapour separator unit can comprise (or be) a condenser or one or several membranes like disclosed in US patent 4 758 250 for instance, which is a polymeric membrane. The condenser may be a specific one comprising a specific shaped tube having different parts at different temperatures; a phase change material, or any other means for cooling and condensing the gases. Alternatively, the condenser may be part of a device already on-board the vehicle, for instance part of the vehicle air conditioning system.

The water collected may be vaporised in the exhaust gases and/or at least part of it may be stored for instance to be available for dissolving excess ammonia that would pressurize unduly the storage tank of the solid absorbing matrix.

Advantageously, the system also comprises a storage unit arranged for storing the ammonia gas produced by the decomposition unit.

Preferably, the storage unit is located inside the container. The above advantages (no pump, no risk of leakage, ease of mounting) are enhanced when the container receives both decomposition and storage units. Furthermore, ammonia gas is toxic and any leak may raise problems. Here, production and storage take place inside the container without ammonia gas leaving it before use. Thus, the safety of the vehicle users is increased.

Preferably, the decomposition unit and the storage unit are attached to each other independently from the container so as to form a module.

Advantageously, this module is removable from the container so as to allow to dismantle the module from the container for repairing or replacing it with another one.

Accordingly, mounting the module made of both units into the container is rendered easier.

Advantageously, the tank comprises a drying unit arranged for removing water vapour from gas coming from the decomposition unit, the drying unit being in flow communication with the storage unit.

This drying unit extracts at least part of the water vapour from the ammonia gas so as to protect the absorption matrix of the storage unit which are sensitive to humidity.

Preferably, the storage unit comprises a solid absorbing matrix arranged for storing ammonia gas by sorption.

As described in international application WO 2006/012903, metal ammine salts (preferably alkaline earth metal chlorides) may be used as solid storage media for ammonia.

Advantageously, the tank is arranged so as to fill the decomposition unit with the precursor coming from the container under the effect of a depression generated by a storing of the ammonia gas on the matrix.

Thus, the module forms a pump that pumps fresh ammonia precursor solution due to the activity of the storage unit.

In one embodiment, the decomposition unit has a piston arranged to be moved under the effect of the depression so as to pump ammonia precursor from the container into the decomposition unit.

Preferably, the storage unit comprises at least two cells arranged in parallel, each cell containing a material suitable for absorbing ammonia gas.

Advantageously, the storage unit comprises at least two branches arranged in parallel to each other, each branch having at least two of the cells arranged in series and being such that the material of the upstream cell, with reference to a flow of ammonia gas coming from the decomposition unit, absorbs ammonia at a lower ammonia vapour pressure than the one of the downstream cell.

Accordingly, the cells of the storage unit may be activated as a function of the needs of the thermal engine. One of the branches may be used to generate ammonia gas sent to the exhaust line while, at the same time, in the other branch, ammonia gas is transferred from one cell to the other. This branch may in turn produce ammonia gas when the other branch is not capable to do it and if there is still a need from the vehicle.

Preferably the tank comprises means for gauging ammonia absorbed in the storage unit.

The invention also provides an assembly for SCR or Selective Catalytic Reduction for purifying the exhaust gases of an internal combustion engine of a vehicle, the assembly comprising:
- a tank according to the invention, containing an ammonia precursor, and- means for metering ammonia gas released from the assembly in the exhaust gases.

The invention also provides a module according to claim 15.

The module may be introduced and mounted into the tank in a very simple way. Storing and transporting of the modules before mounting are also made easy.

The module may be used independently of the tank of the invention.

The invention also provides a SCR or Selective Catalytic Reduction method for purifying the exhaust gases of an internal combustion engine of a vehicle, the method comprising a step of releasing ammonia gas from a storage unit and a step of metering the released ammonia gas in the exhaust gases, wherein the method comprises a phase of regenerating the storage unit comprising the steps of:
- generating ammonia gas by decomposing an ammonia precursor in a decomposition unit; and
- directing the generated ammonia gas to the storage unit, at least one among the decomposition unit and the storage unit being located at least partially inside an ammonia precursor container of the vehicle and/or on a wall of the container.

The SCR method is aimed at injecting exclusively ammonia gas in the exhaust gases. In other words, no ammonia precursor is injected in the exhaust gases. According to the invention, no urea solution is injected in the exhaust gases. There is no line (or conduit) for transporting the urea solution up to the exhaust line and there is no metering device for injecting the urea solution in the exhaust gases. According to the invention, the urea solution is exclusively transported to the decomposition unit, where it enters into a chemical reaction with the enzyme so as to generate the refilling ammonia gas.

A predetermined amount of ammonia precursor is stored on board the vehicle. For example, during vehicle (engine) operation, a desired amount of ammonia precursor to be injected into the biochemical decomposition unit is calculated. Such calculation may be made as a function of information relative to the amount of ammonia gas that has been injected into the exhaust line. In a particular embodiment, such information may derive from data provided by a temperature sensor, a pressure sensor or a flow meter, or any combination of these sensors. In another particular embodiment, such information may derive from data provided by a device configured to measure the concentration of ammonia stored in the solid absorbing matrix. In another particular embodiment, this information may be derived from an estimation of the consumption of ammonia.

There exist well known refilling standards and systems for ammonia precursor, in particular for the AdBlue® solution (commercial solution of urea). The refilling of the storage tank of the ammonia precursor is trivial. For example, this can be achieved by using available standard-designed nozzles and/or bottles with dedicated interfaces.

The ammonia is metered using a gas line which may comprise a non-return valve close to the metering point.

According to the invention, after generating the refilling ammonia gas, it may be compressed by means of a gas pressurisation unit. The function of this gas pressurisation unit is to compress the refilling ammonia gas to a suitable pressure for absorption by the solid absorbing matrix.

When heating the matrix to release ammonia, a too high ammonia pressure build up may occur inside the system, due to thermal inertia or to a potential failure of the heating power regulation. In order to release the pressure below a given set-point, the excess of gaseous ammonia is preferably released by a safety valve and either directly returned to the ammonia precursor tank (preferred embodiment in the case of a solid ammonia precursor), or first dissolved in an adequate amount of water, for instance coming from the evaporation of the precursor solution the case being, and stored on purpose, and at a composition involving an amount of available ammonia identical to the one of the precursor solution (preferred embodiment in the case of urea precursor solutions). In another preferred embodiment, the excess of ammonia released may merely be dissolved in water and the ammonia solution so obtained may be used later on for thermal ammonia generation and storage on the solid absorbing matrix.

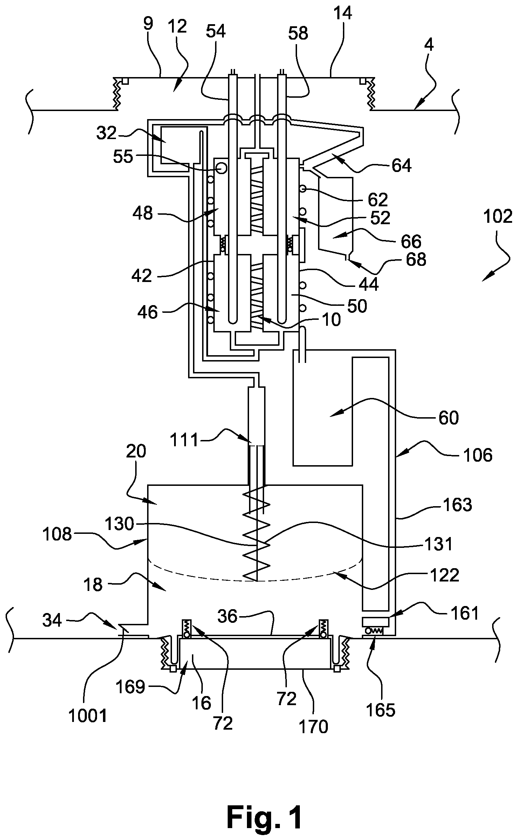

The present invention is illustrated in a non-limitative way by the examples below relying on figures 1 to 5 attached. In these figures, identical or similar devices bear identical or similar reference numbers.

### Example 1

A first example of a tank according to the invention is illustrated on figure 1.

The tank 102 is aimed to be mounted on a vehicle. It comprises a container 4 made for containing an ammonia precursor. Here it contains a water solution of urea such as the Adblue® solution (32.5 wt% urea in water, corresponding to the specifications of the ISO 22241 standard). The tank may be made of high density polyethylene, and may be manufactured by a blow-moulding or an injection process.

Tank 102 also comprises a module 106 having:
- a decomposition unit 108 arranged for decomposing the ammonia precursor of the container into ammonia gas, and
- a storage unit 10 arranged for storing the ammonia gas produced by the decomposition unit.

Both units are attached to each other independently from the container and form a module 106. Module 106 is integrally received inside the container. Module 106 extends from bottom to top of the container, vertically.

Container 4 has a top opening 12 removably closed by a lid 9 and permitting to introduce module 106 as a single element into container 4. For example, opening 12 is a mason jar-type opening, provided with the necessary sealing.

The decomposition unit comprises a lower chamber 18 and an upper chamber 20 separated by a partitioning wall 122 which forms in this example a gas (ammonia) permeable moveable membrane.

Decomposition unit 108 communicates with the storage unit 10 via a channel 111 opening on top wall of the upper chamber 20.

A vertically reciprocating member 130 is mounted into this channel and is attached by its lower end to the center of membrane 122. The top end of the member is free to move inside the channel. A spring 131 is mounted around the member and bears on the top wall of upper chamber 20 on the one hand and on membrane 122 on the other hand. A plunger is thus formed.

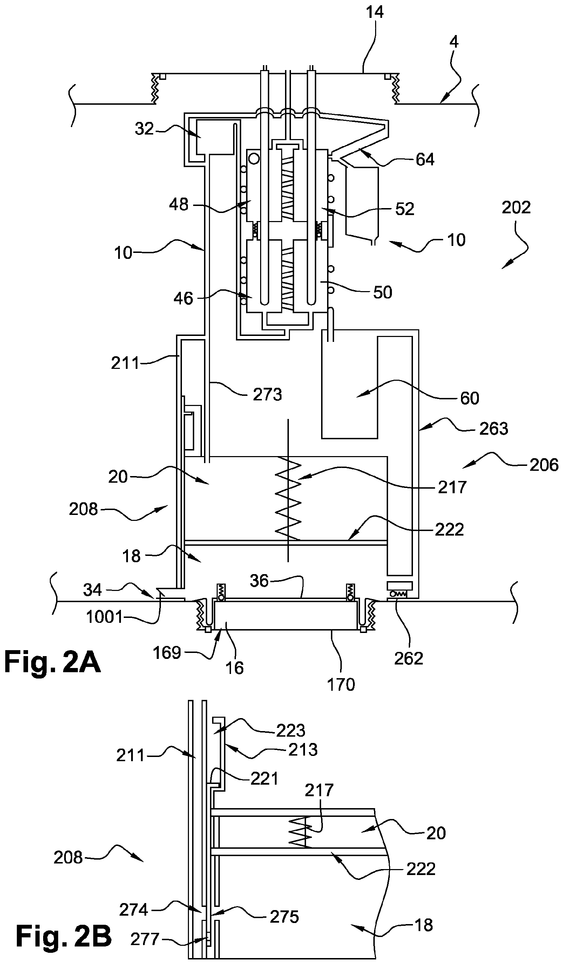

The lower chamber has an inlet 34 opening into the container and allowing the urea solution to flow into the lower chamber. In the examples illustrated in figures 1 and 2A, the inlet 34 comprises a check valve 1001.

An enzyme (made of urease in this example) is immobilized on a support 16 of any kind (membrane, beads, capsules, etc.), using any known way for immobilization, and positioned at the bottom of the decomposition unit 108. The solution received in lower chamber 18 comes into contact with this support.

This chamber also has heating means 36 for transforming the urea into ammonia gas. The module has control means which are not illustrated and allow controlling the heating means.

Under the effect of gravity and the aspiration or depression induced by membrane 122, the solution of the container is admitted in the lower chamber though inlet 34. If necessary, in case the solution of the container is at least partially frozen, thawing of it is achieved by using another heater (not represented in the drawing) situated in the container.

Heater 36 serves to activate enzyme 16 at the requisite temperature for the operation of the urea decomposition catalytic reaction. The heating time is set knowing the capacity of the lower chamber, which determines the amount of urea to be decomposed, and the enzymatic activity of urease.

As the ammonia generation proceeds, ammonia gas passes through membrane 122 and into upper chamber 20 so that the pressure inside it increases, and plunger 130 moves downwards.

Channel 111 is in fluid communication with a chamber 32 used to further dry the ammonia gas. This chamber communicates with the storage unit 10 in which ammonia gas is absorbed. The drying chamber is interposed between the decomposition unit and the storage unit with respect to the flow of ammonia gas.

Accordingly, in this example, the first chamber 18 of the decomposition unit is arranged for decomposing the ammonia precursor into ammonia gas and the second chamber 20 is arranged for receiving ammonia gas from the first chamber and transferring it to the storage unit.

The storage unit 10 is made of two parallel branches 42, 44, each one consisting of a series of two cells: 46, 48 and 50, 52 respectively. The branches are in communication, independently of each other, with drying chamber 32 and decomposition unit 108. The storage unit is arranged so that ammonia gas passes from cell 46 to cell 48 and from cell 50 to cell 52. Thus, cells 46 and 50 are upstream cells and cells 48 and 52 downstream cells. The four cells are all filled with ammonia absorbing/desorbing materials. Alkaline earth metal salts (chloride) are suitable materials for ammonia sorption purpose. In this example, cells 46 and 50 are filled with a sorption material which absorbs ammonia at a lower ammonia vapour pressure than the materials of cells 48 and 52. In this way, ammonia is readily absorbed in cell 46 and/or 50. Magnesium chloride is a suitable salt for cells 46 and 50, and barium chloride is well adapted for cells 48 and 52.

Storage t 10 has two heaters 54, 58 associated with the corresponding branches 42, 44. Each heater has two sections permitting to heat the respective cells of the branch independently from each other. The heaters are controlled through lid 14 and pass through cells 46 and 48 of the first branch and cells 50, 52 of the other branch respectively.

Through thermal activation of cell 46 using the corresponding section of the heater, ammonia gas is desorbed from the material inside cell 46 and transferred to cell 48 where it is absorbed. Further on, ammonia is made available from cell 48 for DeNOx purpose by using the corresponding section of the heater, thus generating ammonia from material introduced in cell 48. The other branch works similarly.

The two branches of the storage unit 10 are controlled by the control means in order to work as a dual system, according to the following cycle:
- filling cell 46 with ammonia coming from drying chamber 32, by absorption on solid matrix,
- supplying ammonia for DeNOx purpose from cell 48, by desorption from solid matrix,
- transferring ammonia from cell 50 to cell 52, through thermal activation of cell 50,
- absorbing ammonia in cell 52,
- then filling cell 50 with ammonia coming from drying chamber 32, by absorption on solid matrix,
- supplying ammonia for DeNOx purpose from cell 52, by desorption from solid matrix,
- transferring ammonia from cell 46 to cell 48, through thermal activation of cell 46, and
- absorbing ammonia in cell 48.

Afterwards, the storage unit is ready for a new cycle.

The gauging of the ammonia content inside the cells is performed by using the thermal response of the cells related to the absorption and desorption heat. The storage unit may comprise at least one temperature probe 55 to measure a temperature of the cells to this end.

Because of the ammonia high solubility in water, the liquid phase in lower chamber 18 is enriched in ammonia during the urea enzymatic decomposition process. Thus, the module also has means to recover ammonia from this solution.

This means comprises a chamber or capacity 60 in fluid communication with lower chamber 18 through a pipe 163 and a pressure valve 165 permitting flow of fluid only from the chamber to the capacity. This valve is set so that its opening occurs as urea in the lower chamber is nearly totally decomposed by the enzyme. This means also comprises a heat exchanger 62 arranged around the four cells 46 to 52 and ending in a cooling unit 64. This unit is in fluid communication, downward with a capacity 66 for recovering the liquid, which has an outlet 68. The cooling unit is also in fluid communication upward with chamber 32. A liquid-vapour separator is thus formed.

When pressure increases in upper chamber 20, liquid in the lower chamber is pushed in capacity 60. The ammonia solution goes up through heat exchanger 62 and is warmed up using heat released by the cells during the ammonia absorption process. After that, ammonia gas is separated from the liquid in cooling unit 64, and the liquid is recovered in capacity 66, and evacuated outside the tank via outlet 68 in a non-illustrated manner, either directly or through the exhaust pipe of the vehicle. Ammonia gas coming from cooling unit 64 enters drying chamber 32 before being absorbed in storage unit 10.

Thus, these recovering means are arranged for:
- heating the liquid phase with heat produced by the storage unit,
- then cooling the liquid phase,
- recovering the ammonia gas from the liquid phase, and
- sending the ammonia gas to the storage unit without making it pass through the decomposition unit.

Pipe 163 also communicates with lower chamber 18 by a valve 161 permitting a flow of liquid only from the pipe to the chamber. Accordingly, part of the liquid phase that entered the pipe for the recovering of ammonia is recovered and falls back into lower chamber 18. This forms a recirculation loop which makes possible the re-treatment of a partial amount of the solution previously introduced in the lower chamber.

Refilling of the lower chamber with fresh urea solution coming from the container is performed by the upward movement of membrane 122 due to the vacuum effect in the upper chamber following ammonia absorption in the storage unit 10. In other words, the module is arranged so as to fill the decomposition unit with the precursor coming from the container under the pumping effect of a depression generated by a storing of the ammonia gas in the storage unit.

The tank has a removable cap 170 closing a bottom opening 169 of container 4 and lower chamber 18. This opening gives direct access from the outside of the tank to enzyme support 16 of the decomposition unit without the need to disassemble the decomposition unit from the tank. Thus, when enzyme deactivation occurs, this device allows the catalyst change, which means the removal of the used enzyme and the introduction of a fresh one. For example, cover is screwed on a neck of the container or fixed to it by other means.

The enzyme support 16 is received in a closed receptacle of the decomposition unit which has two pressure check valves 72 allowing communication between the ammonia precursor inside the lower chamber and the enzyme. Each valve is in communication on one side with the lower chamber and on the other side with the enzyme, so that the solution passes through the valve for contacting the enzyme. Each valve has a ball and a spring. These valves are arranged so that removing the cover reduces the pressure on the corresponding side of the valves and closes them.

Accordingly, during the removal of the enzyme support, its fluid communication with the lower chamber is closed through the check valves. Bottom cap 170 is unscrewed to get access to the immobilized enzyme support, which is removed and replaced. Bottom cap 170 is further tightly screwed and the insertion of the enzyme support in the tank induces the opening of the check valves.

Thus, this tank performs the following functions:
- enzyme storage (preferably immobilized)
- thermal activation of the enzyme
- control of enzyme activation
- removal of deactivated enzyme
- introduction of new enzyme
- renewal of Adblue® urea solution in contact with enzyme
- ammonia gas separation
- ammonia absorption
- ammonia transfer
- ammonia desorption
- ammonia gauging in the storage unit
- ammonia absorption / transfer control and
- removal of the ammonia-degassed solution.

Tank 102 is used in the SCR or Selective Catalytic Reduction method for purifying the exhaust gases of the internal combustion engine of the vehicle. The method comprises a step of releasing ammonia gas from at least one of the solid absorbing matrix and a step of metering the released ammonia gas in the exhaust gases. It also comprises a phase of regenerating the matrix comprising the steps of:
- generating ammonia gas by decomposing an ammonia precursor in the decomposition unit 108; and
- directing the generated ammonia gas to the matrix received in the tank.

This phase is performed by the module, inside the tank.

In the following examples, the parts which are not described and/or illustrated again are similar to those of example 1.

### Example 2

This example is illustrated on figure 2A and 2B, figure 2B showing a portion of figure 2A. This embodiment is similar to example 1 but the permeable membrane is replaced by a rigid wall 222 which is not permeable to ammonia gas. And chambers 18 and 20 are not in fluid communication with each other through the wall. Wall 222 is rigid and planar, and mounted to slide in a direction perpendicular to its plane. Decomposition unit 208 comprises a spring 217 having one end attached to the center of wall 222 and one end attached to a top wall of upper chamber 20.

Wall 222 carries an arm 213 rigidly fixed to the wall and sliding with it.

As shown on figure 2B, module 206 comprises a channel 211 which can be in flow communication with lower chamber 18 through an inlet 274. This channel is in flow communication with drying chamber 32 and the storage unit 10. This channel also has a portion 273 in communication with upper chamber 20 as shown on figure 2A.

A gate 275 is mounted to slide in the same direction as arm 213 with respect to the chambers and to channel 211. It has an opening 277 which can extend in correspondence with inlet 274 so as to permit flow communication from chamber 18 to channel 211 or can extend away from it so that the gate closes the inlet. The upper end of the gate has a hook 221 received in a recess 223 of the arm so that the piston can move the gate to open or close inlet 274.

The tank works as follows.

The urea solution coming from the container and introduced in lower chamber 18 is decomposed during the activation of enzyme 16 using heater 36. Thus a gas pressure is generated in this chamber, which makes the plunger formed by wall 222 move upwards. At a predetermined stage of this movement, arm 213 contacts hook 221 of the gate so that the gate moves up with the plunger. This leads to the gate opening 277 coming into coincidence with inlet 274 so that ammonia gas flows from chamber 18 to channel 211 and to the drying chamber and the storage unit. Ammonia gas is absorbed in this unit, after a drying step. It also flows into upper chamber 20 via portion 273.

As ammonia gas escapes from chamber 18, the plunger is moved downwards by relaxing spring 217, and the solution contained in chamber 18 is pushed to capacity 60, through channel 263.

During the movement of the plunger, the sliding gate moves downwards, thus interrupting the fluid communication between lower chamber 18 and channel 211. But because hook 221 has room to slide in recess 223, the downward movement of the gate starts later than the downward movement of the plunger, so that the flow communication through inlet 274 in not interrupted immediately.

Then, a depression is created in upper chamber 20 as ammonia is absorbed in storage unit 10, and the plunger moves upwards, inducing the pumping of urea solution from the container into the lower chamber. But the plunger does not slide so as opening inlet 274. After that, the tank is ready for another cycle.

For the other functions, the tank works as an example 1 and the method is performed similarly.

### Example 3

In this example, both chambers 18, 20 of the decomposition unit 308 are arranged for receiving the ammonia precursor and putting it in contact with component 16 in the chamber. Also, both chambers are arranged for transferring ammonia gas from the chamber to the storage unit (which is not illustrated). More precisely, each chamber is arranged for decomposing the ammonia precursor into ammonia gas and transferring it to the storage unit without this gas passing through the other chamber. The chambers extend on opposite sides of a moveable rigid wall 322 which is not permeable.

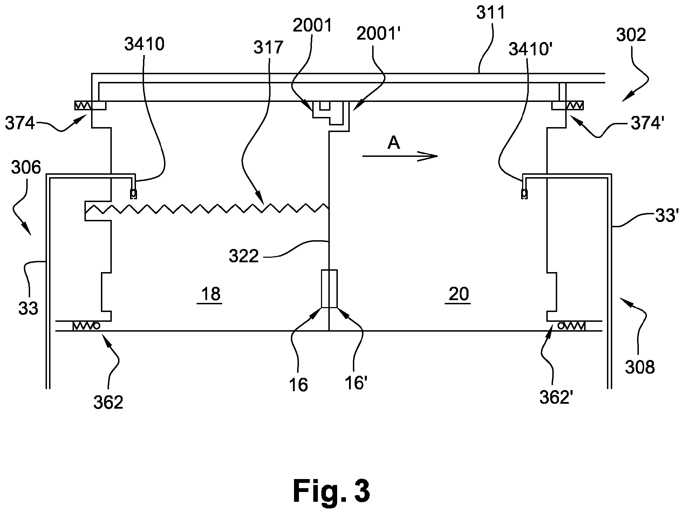

In this example, only decomposition unit 308 is illustrated and described, the storage unit being similar to those of the previous examples. Figure 3 illustrates more specifically the process of producing ammonia and renewing the solution coming in contact with the enzyme.

The decomposition unit has two chambers 18, 20 arranged side by side, which are separated by a common slideable planar wall 322. Wall 322 is mounted to slide from an end wall of the unit to the other along a direction perpendicular to a plane of wall 322. It is attached by a spring 317 to an end wall of the unit. Wall 322 is mounted for sliding in the direction of this end or away from it. Each chamber (18, 20) is in fluid communication with the solution in the container 4, independently from the other chamber, via a pipe (33, 33') having a pressure valve (3410, 3410') permitting flow of urea solution from the container to the chamber only.

Each chamber (18, 20) contains a respective amount of the enzyme that can come into contact with the liquid inside the chamber. For example, the enzyme supports (16, 16') are attached to wall 322 and may form a unique enzyme body passing through this wall. Thus, both sides of the wall are loaded with enzyme portions. Each chamber also comprises a heater which has not been illustrated.

Each chamber has an outlet having a pressure valve (362, 362') arranged at the bottom of the chamber for permitting only flow of liquid out of the chamber. These outlets are connected to the ammonia/water separation unit.

Each chamber also has an outlet communicating with a channel 311 which goes to the drying chamber and the storage unit. This outlet is closed by a valve (374, 374') having a pusher (2001, 2001') which opens the valve when the pusher is displaced by the moveable wall that comes close to the corresponding end wall.

The tank works as follows. When left chamber 18 is filled with urea solution from the container and ammonia is needed, enzyme 16 is thermally activated by the heater, so that an ammonia pressure builds up in the vapour dome of this chamber. Thus, wall 322 is pushed in the direction indicated by arrow A, and a part of the wall comes into contact with the pusher of valve 374 which is pushed further, allowing fluid communication between left chamber and channel 311. Thus, ammonia gas escapes through channel 311 to attain the drying chamber and the storage unit. During the movement of the wall, the liquid contained in right chamber 20 is evacuated through outlet 362'. Then, the thermal activation of the enzyme is stopped.

When ammonia pressure is released in left chamber 18, wall 322 moves in the direction opposite to arrow A using the return strength of spring 317, and the pusher 2001 of the valve 374 interrupts the fluid communication between right chamber 20 and channel 311. At the same time, right chamber is filled by urea solution from the container through valve 3410'. Filling level is limited by a float of this valve.

Enzyme 16' of the right chamber is then thermally activated, and gas pressure increases in the corresponding vapour dome, as ammonia is generated during urea enzymatic decomposition. Wall 322 is pushed left in the direction opposite to arrow A, until the pusher 2001 opens valve 374, which generates a fluid communication between right chamber 20 and channel 311. Thus ammonia gas passes from the right chamber 20 to channel 311. During the movement of the wall, the liquid in left chamber 18 is removed through outlet 362.

Thermal activation of enzyme is stopped. Pressure drops in the right chamber, and wall 322 moves in the direction of arrow A, pumping urea solution again in the left chamber through valve 3410.

Apart from that, the tank and the method are similar to those of the previous examples.

### Example 4

Example 4 gives another way of integrating inside a module the production of ammonia from the decomposition of the urea solution.

In this embodiment, decomposition unit 408 is contiguous with the top wall of container 4. It has a first upper chamber 18 and a second lower chamber 20 separated by a wall 422 which is rigidly fixed with respect to the other walls of the unit.

The first chamber 18 is arranged for decomposing the ammonia precursor into ammonia gas and transferring it to the storage unit without this gas passing through the second chamber. The second chamber 20 is arranged for receiving the liquid solution from the first chamber.

A pipe 33 goes from inside upper chamber 18 and plunges into the urea solution of the container 4. In chamber 18, it has an inlet oriented down and equipped with a float arranged for closing the outlet when the level of liquid is sufficient in the chamber, to prevent transfer of liquid back to the container.

This chamber contains the enzyme support (immobilized urease) 16 in liquid contact with the urea solution coming from tank 4. Tank 4 has an upper opening 476 giving direct access to the interior of the upper chamber from outside the tank without the need to disassemble the module from the tank. This permits to replace the enzyme support 16 through the top of the module.

A heater is provided which is not shown and which extends inside chamber 18.

A channel 411 has an inlet extending inside this chamber and is equipped with a valve 474. It is connected in a manner non illustrated to the drying chamber and the storage unit which are both similar to those of example 1.

A siphon pipe 475 goes up from the bottom of chamber 18 and plunges down in lower chamber 20. Its outlet in chamber 20 is equipped with a float 477 preventing flow of liquid back from chamber 20 to upper chamber 18.

A gas channel 478 extends from the upper part of chamber 18 to the upper part of chamber 20. Its inlet 479 in chamber 18 is equipped with a valve permitting flow of gas only from the upper chamber to the lower chamber. Another gas channel 480 goes from the outlet of channel 478 in lower chamber 20 to channel 411 to which it is connected downstream of valve 474.

A pipe 482 opens in the bottom of lower chamber 20 for evacuating a solution from it.

The tank works as follows.

Ammonia gas is generated upon thermal activation of enzyme 16 and flows to the storage unit through channels 411 passing valve 474 in open position. The time to decompose urea is determined knowing the volume of urea solution initially introduced in chamber 18, coupled with the enzyme catalytic activity, and the thermal activation of enzyme 16 corresponds to that decomposition time.

When this time elapsed, the thermal activation is stopped, and valve 474 is closed. During the ammonia absorption process, a first level of depression is set in lower chamber 20, though channel 480. Thus, the solution of chamber 18 is drawn in chamber 20 through siphon pipe 475. Its float 477 closes the end of pipe 475 when all the liquid is transferred in the lower chamber. This solution passes through the outlet 482 connected to the ammonia/water separation unit (not shown in the figure) which is similar to the one of example 1.

Then, as the ammonia absorption process goes on in the storage unit, a higher level of depression appears in channel 480, which opens pressure valve 479 of channel 478 and is set in chamber 18. Fresh urea solution is then sucked from tank 4 through inlet 3411 into upper chamber 18. The level of solution in this chamber is limited by the float of this inlet. This chamber is now ready to begin a new ammonia production cycle.

Apart from that, the tank and the method are similar to those of the previous examples.

### Example 5

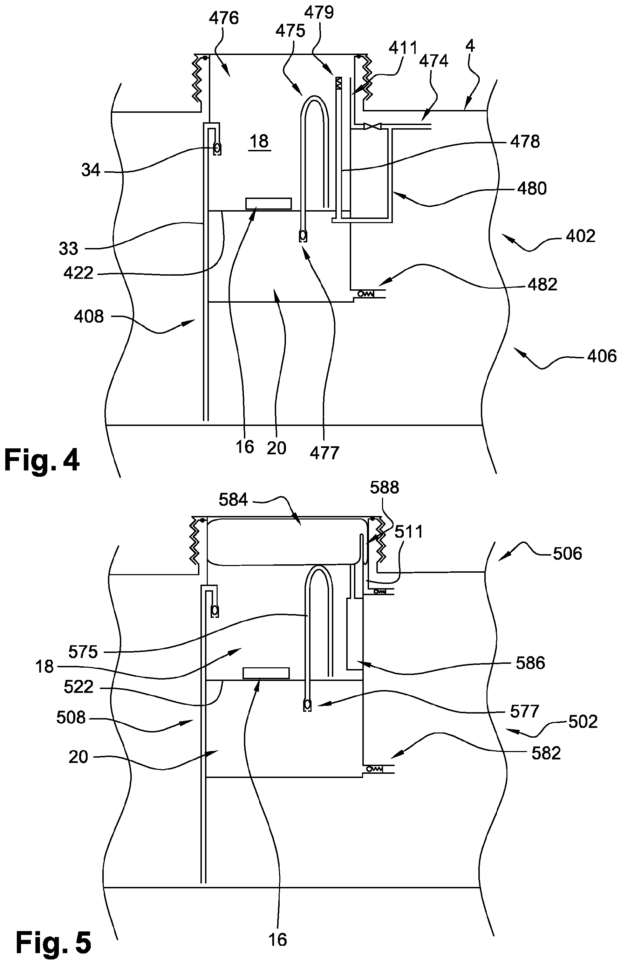

Except for the features which will be presented, tank 502 of this example is very similar to the one 402 of figure 4.

Figure 5 provides the illustration of a module according to example 5, which comprises a bladder 584 arranged for controlling a flow of ammonia gas from the decomposition unit to the storage unit. Indeed, the upper chamber 18 of the decomposition unit 508 comprises a bladder 584 formed by an inflatable pouch having a wall impermeable to ammonia gas. The interior of the bladder communicates exclusively with a supplementary ammonia storage unit 586 located inside upper chamber 18 and equipped with its own non-illustrated heating means. Accordingly, ammonia gas may be produced by this unit to inflate the bladder, or may go from the bladder to be absorbed in the matrix of this unit. Besides, the bladder has a closed extension 588 inserted inside the inlet portion of channel 511, located in chamber 18, which communicates with the drying chamber and the main storage unit (not illustrated). Here, the only communication between the decomposition unit 508 and the main storage unit is through this inlet portion.

The tank works as follows.

Ammonia production starts in upper chamber 18 when the enzyme (immobilized urease) 16 is thermally activated to decompose the urea solution coming from tank 4. During the enzyme activation, pouch 584 is not fully pressurized, so that channel 511 is not blocked by extension 588, providing a gaseous communication between chamber 18 and the absorption unit for ammonia storage in the solid matrix (not shown in the figure).

When the solution decomposition is over, the heating of the supplementary ammonia storage unit 586 is controlled so that ammonia is released inside the bladder which is thus pressurized. This results in extension 588 being inflated, thus causing the blockage of channel 511. Communication between chamber 18 and the storage unit is thus interrupted.

As the volume of the bladder increases in chamber 18, the solution is transferred into chamber 20 through siphon pipe 575, and the float 577 closes the end of the pipe when the transfer is completed.

Then, heating of the complementary ammonia storage unit is stopped, and depressurization of the bladder follows, as ammonia gas of the bladder is re-absorbed in the solid matrix of unit 586. Accordingly, low pressure conditions appear in chamber 18, and fresh urea solution is sucked from tank 4 through inlet 3411. The filling level in chamber 18 is controlled by the float of this inlet.

Apart from that, the tank and the method are similar to those of the previous examples.

Of course, many modifications may be made to the invention without departing from its scope.

Decomposition of the ammonia precursor may be made without an enzyme, using only the effect of heat.

The system for decomposing the ammonia precursor of the container into ammonia gas and storing it may be located at least partially outside the container on a wall of the container. It may be located integrally outside the container.

## Claims

1. A tank (102; 202; 302; 402; 502) for mounting on a vehicle, the tank comprising:
- a container (4) suitable for containing an ammonia precursor under the form of a urea solution, and
- a system arranged for decomposing the ammonia precursor of the container into ammonia gas and storing it,
**characterized in that** the system is located at least partially inside the container, preferably on a wall of the container.

2. A tank according to the preceding claim wherein the ammonia precursor is under the form of an aqueous urea solution.

3. A tank (102; 202; 302; 402; 502) according to any of the preceding claims wherein the system is located at least partially inside the container, preferably all the system being located inside the container.

4. A tank according to any of the preceding claims wherein the system comprises a decomposition unit (108; 208; 308; 408; 508).

5. A tank according to the preceding claim wherein the decomposition unit comprises at least one protein component (16) suitable for decomposing the ammonia precursor.

6. A tank according to the preceding claim, wherein the protein component (16) comprises at least one enzyme, such as urease.

7. A tank according to any of claims 4 to 6, wherein the decomposition unit is equipped with a heater (36).

8. A tank according to any of claims 4 to 7, comprising means (60, 62, 64) for recovering ammonia present in liquid phase in the decomposition unit.

9. A tank (102-502) according any of claims 4 to 8, wherein the system also comprises a storage unit (10) arranged for storing the ammonia gas produced by the decomposition unit.

10. A tank according to the preceding claim, wherein the decomposition unit and the storage unit (10) are attached to each other independently from the container so as to form a module.

11. A tank according to any of claims 9 to 10, comprising a drying unit (32) arranged for removing water vapour from gas coming from the decomposition unit, the drying unit being in flow communication with the storage unit.

12. A tank according to any of claims 9 to 11, wherein the storage unit (10) comprises a solid absorbing matrix arranged for storing ammonia gas by sorption.

13. A tank (102; 202; 402) according to the preceding claim, arranged so as to fill the decomposition unit with the precursor coming from the container under the effect of a depression generated by a storing of the ammonia gas on the matrix.

14. A tank according to the any of claims 9 to 13, wherein the storage unit comprises at least two cells (46, 48, 50, 52) arranged in parallel, each cell containing a material suitable for absorbing ammonia gas, the storage unit preferably comprising at least two branches arranged in parallel to each other, each branch having at least two of the cells arranged in series and being such that the material of the upstream cell (46, 50), with reference to a flow of ammonia gas coming from the decomposition unit, absorbs ammonia at a lower ammonia vapour pressure than the one of the downstream cell (48, 52).

15. An assembly for SCR or Selective Catalytic Reduction for purifying the exhaust gases of an internal combustion engine of a vehicle, the assembly comprising:
- a tank (102-502) according to any of the preceding claims, containing an ammonia precursor, and
- means for metering ammonia gas released from the system in the exhaust gases.

16. A module (106-506) suitable for being received at least partially inside an ammonia precursor tank for mounting on a vehicle, and preferably for being received on a wall of such a tank, the module comprising at least:
- a decomposition unit (108-508) arranged for decomposing an ammonia precursor, under the form of a urea solution, into ammonia gas, and
- a storage unit (10) arranged for storing the ammonia gas produced by the decomposition unit,
the units being attached to each other independently of the ammonia precursor tank.

## Patentansprüche

1. Ein Tank (102; 202; 302; 402; 502) zur Montage an einem Fahrzeug, der Tank umfassend:
- einen Behälter (4), welcher dazu geeignet ist, einen Vorläufer von Ammoniak in der Form einer Harnstofflösung zu beinhalten, und
- ein System, welches dazu eingerichtet ist, den Vorläufer von Ammoniak des Behälters in Ammoniakgas zu zersetzen und zu speichern,
**dadurch gekennzeichnet, dass** das System zumindest teilweise innerhalb des Behälters angeordnet ist, vorzugsweise an einer Wand des Behälters.

2. Ein Tank nach dem vorstehenden Anspruch, wobei der Vorläufer von Ammoniak in der Form einer wässrigen Harnstofflösung vorliegt.

3. Ein Tank (102; 202; 302; 402; 502) nach einem beliebigen der vorstehenden Ansprüche, wobei das System zumindest teilweise innerhalb des Behälters angeordnet ist, wobei vorzugsweise das gesamte System innerhalb des Behälters angeordnet ist.

4. Ein Tank nach einem beliebigen der vorstehenden Ansprüche, wobei das System eine Einheit (108; 208; 308; 408; 508) zur Zersetzung umfasst.

5. Ein Tank nach dem vorstehenden Anspruch, wobei die Einheit zur Zersetzung wenigstens eine Eiweißkomponente (16) umfasst, welche dazu geeignet ist, den Vorläufer von Ammoniak zu zersetzen.

6. Ein Tank nach dem vorstehenden Anspruch, wobei die Eiweißkomponente (16) wenigstens ein Enzym wie Urease umfasst.

7. Ein Tank nach einem beliebigen der Ansprüche 4 bis 6, wobei die Einheit zur Zersetzung mit einer Heizung (36) ausgestattet ist.

8. Ein Tank nach einem beliebigen der Ansprüche 4 bis 7, umfassend Mittel (60, 62, 64) zum Wiederherstellen von Ammoniak, welches in flüssiger Phase in der Einheit zur Zersetzung vorliegt.

9. Ein Tank (102 - 502) nach einem beliebigen der Ansprüche 4 bis 8, wobei das System weiterhin eine Speichereinheit (10) umfasst, welche dazu eingerichtet ist, dass Ammoniakgas zu speichern, welches durch die Einheit zur Zersetzung produziert worden ist.

10. Ein Tank nach dem vorstehenden Anspruch, wobei die Einheit zur Zersetzung und die Speichereinheit (10) aneinander oder unabhängig von dem Behälter befestigt sind, sodass sie ein Modul bilden.

11. Ein Tank nach einem beliebigen der Ansprüche 9 oder 10, umfassend eine Trocknungseinheit (32), welche dazu eingerichtet ist, Wasserdampf von Gas, welches von der Einheit zur Zersetzung kommt, zu entfernen, wobei die Trocknungseinheit in einer Flusskommunikation mit der Speichereinheit ist.

12. Ein Tank nach einem beliebigen der Ansprüche 9 bis 11, wobei die Speichereinheit (10) eine feste absorbierende Matrix umfasst, welche dazu eingerichtet ist, Ammoniakgas durch Sorption zu speichern.

13. Ein Tank (102; 202; 402) nach dem vorstehenden Anspruch, derart angeordnet, dass die Einheit zur Zersetzung mit dem Vorläufer, welcher von dem Behälter unter dem Effekt eines Unterdrucks durch eine Speicherung von dem Ammoniakgas in der Matrix hervorgerufen erzeugt wird, zu füllen.

14. Ein Tank nach einem beliebigen der Ansprüche 9 bis 13, wobei die Speichereinheit wenigstens zwei Zellen (46, 48, 50, 52) umfasst, welche parallel angeordnet sind, wobei jede Zelle ein Material beinhaltet, welches zur Absorption von Ammoniakgas geeignet ist, wobei die Speichereinheit bevorzugt wenigstens zwei Zweige umfasst, welche parallel zueinander angeordnet sind, wobei jeder Zweig wenigstens zwei der Zellen hat, die in Reihe angeordnet sind, und derart beschaffen sind, dass das Material der stromaufwärts gelegenen Zelle (46, 50), mit Bezug auf einen Fluss von Ammoniakgas, welches von der Einheit zur Zersetzung kommt, Ammoniak bei einem geringeren Ammoniak-Dampfdruck absorbiert als das Material der stromabwärts gelegenen Zelle (48, 52).

15. Eine Anordnung für SCR oder selektive katalytische Reduktion zur Reinigung des Abgases eines Verbrennungskraftmotors eines Fahrzeugs, die Anordnung umfassend:
- einen Tank (102 - 502) nach einem beliebigen der vorstehenden Ansprüche, beinhaltend einen Vorläufer von Ammoniak, und
- Mittel zur Messung von Ammoniakgas, welches von dem System in dem Abgas freigesetzt wird.

16. Ein Modul (106 - 506), welches geeignet ist wenigstens teilweise innerhalb eines Tanks für einen Vorläufer von Ammoniak aufgenommen zu werden, wobei der Tank geeignet ist, an einem Fahrzeug montiert zu werden, und wobei das Modul bevorzugt geeignet ist, an der Wand eines solchen Tanks aufgenommen zu werden, das Modul wenigstens umfassend:
- eine Einheit zur Zersetzung (108 - 508), welche dazu eingerichtet ist, einen Vorläufer von Ammoniak in der Form einer Harnstofflösung in ein Ammoniakgas zu zersetzen, und
- eine Speichereinheit (10), welche dazu eingerichtet ist, das Ammoniakgas, welches durch die Einheit zur Zersetzung produziert worden ist, zu speichern,
wobei die Einheiten unabhängig von dem Tank für den Vorläufer von Ammoniak aneinander befestigt sind.

## Revendications

1. Réservoir (102; 202 ; 302 ; 402 ; 502) pour montage sur un véhicule, le réservoir comprenant :
- un récipient (4) adapté pour contenir un précurseur d'ammoniac sous la forme d'une solution d'urée, et
- un système configuré pour décomposer le précurseur d'ammoniac du récipient en gaz d'ammoniac et stocker celui-ci,
**caractérisé en ce que** le système est situé au moins partiellement à l'intérieur du récipient, de préférence sur une paroi du récipient.

2. Réservoir selon la revendication précédente dans lequel le précurseur d'ammoniac est sous la forme d'une solution aqueuse d'urée.

3. Réservoir (102 ; 202 ; 302 ; 402 ; 502) selon l'une quelconque des revendications précédentes dans lequel le système est situé au moins partiellement à l'intérieur du récipient, la totalité du système étant, de préférence, située à l'intérieur du récipient.

4. Réservoir selon l'une quelconque des revendications précédentes, dans lequel le système comprend une unité de décomposition (108 ; 208 ; 308 ; 408 ; 508).

5. Réservoir selon la revendication précédente dans lequel l'unité de décomposition comprend au moins un composant protéique (16) adapté pour décomposer le précurseur d'ammoniac.

6. Réservoir selon la revendication précédente, dans lequel le composant protéique (16) comprend au moins une enzyme, telle qu'une uréase.

7. Réservoir selon l'une quelconque des revendications 4 à 6, dans lequel l'unité de décomposition est équipée d'un dispositif de chauffage (36).

8. Réservoir selon l'une quelconque des revendications 4 à 7, comprenant des moyens (60, 62, 64) pour récupérer l'ammoniac présent en phase liquide dans l'unité de décomposition.

9. Réservoir (102-502) selon l'une quelconque des revendications 4 à 8, dans lequel le système comprend en outre une unité de stockage (10) agencée pour stocker le gaz d'ammoniac produit par l'unité de décomposition.

10. Réservoir selon la revendication précédente, dans lequel l'unité de décomposition et l'unité de stockage (10) sont fixées l'une à l'autre indépendamment du récipient de façon à former un module.

11. Réservoir selon l'une quelconque des revendications 9 à 10, comprenant une unité de séchage (32) agencée pour éliminer la vapeur d'eau d'un gaz provenant de l'unité de décomposition, l'unité de séchage étant en communication fluidique avec l'unité de stockage.

12. Réservoir selon l'une quelconque des revendications 9 à 11, dans lequel l'unité de stockage (10) comprend une matrice d'absorption solide configurée pour stocker du gaz d'ammoniac par sorption.

13. Réservoir (102 ; 202 ; 402) selon la revendication précédente, configuré de façon à remplir l'unité de décomposition avec le précurseur provenant du récipient sous l'effet d'une dépression générée par un stockage du gaz d'ammoniac sur la matrice.

14. Réservoir selon l'une quelconque des revendications 9 à 13, dans lequel l'unité de stockage comprend au moins deux cellules (46, 48, 50, 52) agencées en parallèle, chaque cellule contenant un matériau adapté pour absorber le gaz d'ammoniac, l'unité de stockage comprenant de préférence au moins deux branches agencées en parallèle l'une à l'autre, chaque branche ayant au moins deux des cellules agencées en série et étant telle que le matériau de la cellule en amont (46, 50), par rapport à un flux de gaz d'ammoniac provenant de l'unité de décomposition, absorbe l'ammoniac à une pression de vapeur d'ammoniac plus faible que la cellule en aval (48, 52).

15. Ensemble pour SCR ou réduction catalytique sélective pour purifier les gaz d'échappement d'un moteur à combustion interne d'un véhicule, l'ensemble comprenant :
- un réservoir (102-502) selon l'une quelconque des revendications précédentes, contenant un précurseur d'ammoniac, et
- des moyens pour doser le gaz d'ammoniac libéré depuis le système dans les gaz d'échappement.

16. Module (106-506) adapté pour être reçu au moins partiellement à l'intérieur d'un réservoir de précurseur d'ammoniac pour montage sur un véhicule, et de préférence pour être reçu sur une paroi d'un tel réservoir, le module comprenant au moins :
- une unité de décomposition (108-508) agencée pour décomposer un précurseur d'ammoniac, sous la forme d'une solution d'urée, en gaz d'ammoniac, et
- une unité de stockage (10) configurée pour stocker le gaz d'ammoniac produit par l'unité de décomposition, les unités étant fixées l'une à l'autre indépendamment du réservoir de précurseur d'ammoniac.
